# EUROPEAN PATENT APPLICATION

(11) **EP 2 050 654 A1**
(43) Date of publication of application: **22.04.2009**
(21) Application number: 07791649.2
(22) Date of filing: 31.07.2007
(51) Int. Cl.: B62D 5/04, H02K 7/16

(54) **ELECTRIC POWER STEERING SYSTEM**

(30) Priority: 01.08.2006 JP 2006210117
(71) Applicant: NSK Ltd., Tokyo 141-8560 (JP)
(72) Inventor: SEKINE, Takaaki, Fujisawa-shi Kanagawa 251-8501 (JP); HYOUDOU, Naoki, Fujisawa-shi Kanagawa 251-8501 (JP); KASHIMOTO, Keiji, Maebashi-shi Gunma 371-8527 (JP)
(74) Representative: Klingseisen, Franz
(86) International application number: PCT/JP2007/064964
(87) International publication number: WO 2008/016040

(57) **Abstract**

To provide an electric power steering apparatus in which ground processing for respective sections requiring a ground can be reduced to necessary minimum to improve assemblability. An electric power steering apparatus includes a steering column 3 having inserted therein a steering shaft 2 to which steering torque is transmitted and an electric motor 5 that transmits a steering assisting force to the steering shaft 2 via a reduction mechanism in a conductive reduction gear box 4. A control unit 19 including boards 23 and 25 mounted with control circuits that control to drive the electric motor is mounted on the reduction gear box 4, a connecting section of the electric motor 5 is electrically connected to the control unit 19 directly, and connection of the reduction gear box 4 and the control unit 19 to a ground is performed via a grounding line 29 disposed between the control unit 19 and a power feeding unit 30.

## Description

### Technical Field

The present invention relates to an electric power steering apparatus including a steering column having inserted therein a steering shaft to which steering torque is transmitted and an electric motor that transmits a steering assisting force to the steering column via a reduction mechanism in a reduction gear box.

### Background Art

As an electric power steering apparatus in the past, for example, as described in JP2005-329866A, JP2005-329867A, JP2005-329868A, and JP2005-329869A, there has been proposed an electric power steering apparatus in which a motor is housed in a part of a rack case or a steering gear box in which a rack shaft is slidably housed or mounted, a housing in which a control board for controlling to drive the motor is housed is formed in the rack case or the steering gear box, and, when the control board inserted from an opening of the housing is brought into contact with an attachment boss formed in a bottom portion opposed to the opening, a board connection terminal provided in the control board comes into contact with a motor side connection terminal protrudingly provided in the housing and electrically connected thereto. On the control board, a CPU is attached on a front surface side, a capacitor, a power relay, and the like are disposed and a supporting board serving as a heat sink is protrudingly provided on a rear surface side, and an FET (field effect transistor) is attached to this supporting board to configure a bridge circuit, and a plus side of the bridge circuit is connected to a battery serving as a power supply via the power relay and a minus side thereof is earthed.

### Disclosure of the Invention

However, in the example in the past disclosed in JP2005-329866A, JP2005-329867A, JP2005-329868A, and JP2005-329869A, the motor side connection terminal formed in the electric motor is connected to the board side connection terminal formed on the control board, a torque sensor and a connector formed on the control board are connected by a signal line, the plus side of the bridge circuit including four FETs disposed on the control board is connected to the battery and the minus side thereof is earthed. There is an unsolved problem in that, to earth the minus side of the bridge circuit, since it is necessary to connect an earth line to a vehicle body side member, this is bothersome and causes an earth failure.

Moreover, in a column-type electric power steering apparatus as the electric power steering apparatus, for example, as described in JP2004-131047A, a torque sensor including a magnetic sensor is incorporated in a column housing and a signal terminal of this torque sensor is directly connected to a control board to omit a signal line. In this way, in the column-type electric power steering apparatus, because the torque sensor including the magnetic sensor is incorporated in the column housing, it is necessary to ground the torque sensor to a vehicle body side using a ground harness exclusive for the column housing in order to improve EMC (electromagnetic compatibility) of a circuit system of the torque sensor. The ground harness for this purpose is necessary.

In this way, in the column-type electric power steering apparatus, ground wires are necessary in both the column housing and the control circuit. Therefore, there is an unsolved problem in that assemblability of the electric power steering apparatus falls, a relative potential difference occurs because the ground wires in two routes are wired to different places of a vehicle, respectively, and a fall in electromagnetic compatibility (EMC) and fluctuation in control accuracy due to the occurrence of the earth potential difference occur.
Therefore, the present invention has been devised in view of the unsolved problems of the examples in the past and it is an object of the present invention to provide an electric power steering apparatus in which ground processing for respective sections requiring a ground can be reduced to necessary minimum to improve assemblability and a fall in electromagnetic compatibility and fluctuation in control accuracy can be controlled.

In order to attain the object described above, an electric power steering apparatus according to claim 1 is an electric power steering apparatus including a steering column having inserted therein a steering shaft to which steering torque is transmitted and an electric motor that transmits a steering assisting force to the steering shaft via a reduction mechanism in a conductive reduction gear box. The electric power steering apparatus is characterized in that a control unit including a control board mounted with a control circuit that controls to drive the electric motor is mounted on the reduction gear box, a connecting section of the electric motor is electrically connected to the control unit directly, and connection of the reduction gear box and the control unit to a ground is performed via a grounding line disposed between the control unit and a power feeding unit.

An electric power steering apparatus according to claim 2 is characterized in that, in the invention according to claim 1, the control unit includes at least a power module board mounted with a power module involving heat generation that controls to drive the electric motor and an insulated frame that surrounds the power module board and includes a unit side connecting section that connects the connecting section of the electric motor and a power supply connector to which the grounding line is connected, the power module board is mounted on a control-unit mounting surface of the reduction gear box, and the grounding line is connected to the reduction gear box via the power module board.

Moreover, an electric power steering apparatus according to claim 3 is characterized in that, in the invention according to claim 1, the control unit includes at least a board mounted with the control circuit, an insulated frame that surrounds the board and includes a unit side connecting section that connects the connecting section of the electric motor and a power supply connector to which the grounding line is connected, and a conductive cover that covers the control board, the power module board, and the insulated frame, and the grounding line is connected to the reduction gear box via the conductive cover.

Furthermore, an electric power steering apparatus according to claim 4 is characterized in that, in the invention according to claim 3, the board includes a control board mounted with a command-value calculating unit that calculates a driving command value for the electric motor and a power module board mounted with a power module involving heat generation that controls to drive the electric motor on the basis of the driving command value from the command-value calculating unit.
Moreover, an electric power steering apparatus according to claim 5 is characterized in that, in the invention according to claim 1, the control unit includes at least a control board mounted with a command-value calculating unit that calculates a driving command value for the electric motor, a power module board mounted with a power module involving heat generation that controls to drive the electric motor, and an insulated frame that surrounds the control board and the power module board and includes a unit side connecting section that connects the connecting section of the electric motor and a power supply connector to which the grounding line is connected, the power module board is mounted on a control-unit mounting surface of the reduction gear box, and a first grounding path connected to the reduction gear box via the power module board and a second grounding path connected to the reduction gear box via the conductive cover are formed in parallel between the grounding line and the reduction gear box.

An electric power steering apparatus according to claim 6 is characterized in that, in the invention according to any one of claims 1 to 5, the reduction gear box is made of a highly thermally conductive material.
Moreover, an electric power steering apparatus according to claim 7 is characterized in that, in the invention according to claim 6, the reduction gear box is formed by die-casting any one of aluminum, an aluminum alloy, magnesium, and a magnesium alloy.

Moreover, an electric power steering apparatus according to claim 8 is characterized in that, in the invention according to any one of claims 1 to 7, the reduction gear box includes at least a worm housing unit that houses a worm coupled to an output shaft of the electric motor, a worm-wheel housing unit that houses a worm wheel coupled to the steering shaft, and a torque-sensor housing unit that is continuously connected to the worm-wheel housing unit, houses the torque sensor, and is coupled to a steering column, and a control-unit mounting section on which the control unit is mounted is formed in an outer periphery of the worm housing unit, the worm-wheel housing unit, and the torque-sensor housing unit.

Furthermore, an electric power steering apparatus according to claim 9 is characterized in that, in the invention according to claim 8, a distal end of the torque-sensor housing unit is formed as a contraction stopper for the steering column at the time of collapse, and a contraction stopper side end surface position of the control unit mounted on the control-unit mounting section is set further on a worm-wheel housing unit side than the contraction stopper.
According to the present invention, the control unit including the board mounted with the control circuit that controls to drive the electric motor is mounted on the reduction gear box, the connecting section of the electric motor is electrically connected to the control unit directly, and the connection of the reduction gear box and the control unit to the ground is performed via the grounding line disposed between the control unit and the power feeding unit. Therefore, since the reduction gear box and the control unit are grounded to the power feeding unit via the common ground line, there is an effect that it is possible to improve electromagnetic compatibility (EMC) of the reduction gear box and it is possible to reduce the number of components and man-hour and improve assemblability of the electric power steering apparatus.

Since the grounding paths between the control unit and the reduction gear box are formed via the conductive cover, it is possible to improve electromagnetic compatibility of the control unit itself.

### Brief Description of the Drawings

FIG. 1 is a perspective view showing an embodiment of an electric power steering apparatus according to the present invention;
FIG. 2 is a front view of the electric power steering apparatus according to the present invention;
FIG. 3 is a left side view of FIG. 2;
FIG. 4 is a plan view of FIG. 2;
FIG. 5 is a disassembled perspective view of a main part of the present invention;
FIG. 6 is a disassembled perspective view of the main part of the present invention viewed from a direction opposite to that in FIG. 5;
FIG. 7 is a longitudinal sectional view showing a main part in a reduction gear box position in enlargement;
FIG. 8 is a front view showing the structure of bus bars of an electric motor;
FIG. 9 is a perspective view showing a relation between the reduction gear box and a control board;
FIG. 10 is a perspective view showing a state in which external connection terminals of a torque sensor in the reduction gear box are inserted through the control board;
FIGS. 11A and 11B are the perspective view showing, in enlargement, a main part in which a connection relation between the electric motor and a control unit is shown;
FIG. 12 is a disassembled perspective view showing a first grounding path;
FIG. 13 is an overall diagram showing grounding to a battery;
FIG. 14 is a perspective view showing the electric power steering apparatus at the time of collapse;
FIG. 15 is a left side view of the electric power steering apparatus at the time of collapse;
FIG. 16 is a plan view of the electric power steering apparatus at the time of collapse;
FIG. 17 is a disassembled perspective view showing a second grounding path in a second embodiment of the present invention;
FIG. 18 is a disassembled perspective view showing first and second grounding paths in another embodiment of the present invention; and
FIGS. 19A, 19B and 19C are the perspective view showing a modification of the bus bars of the electric motor.

### Best Mode for Carrying Out the Invention

Embodiments of the present invention will be hereinafter explained on the basis of the drawings.

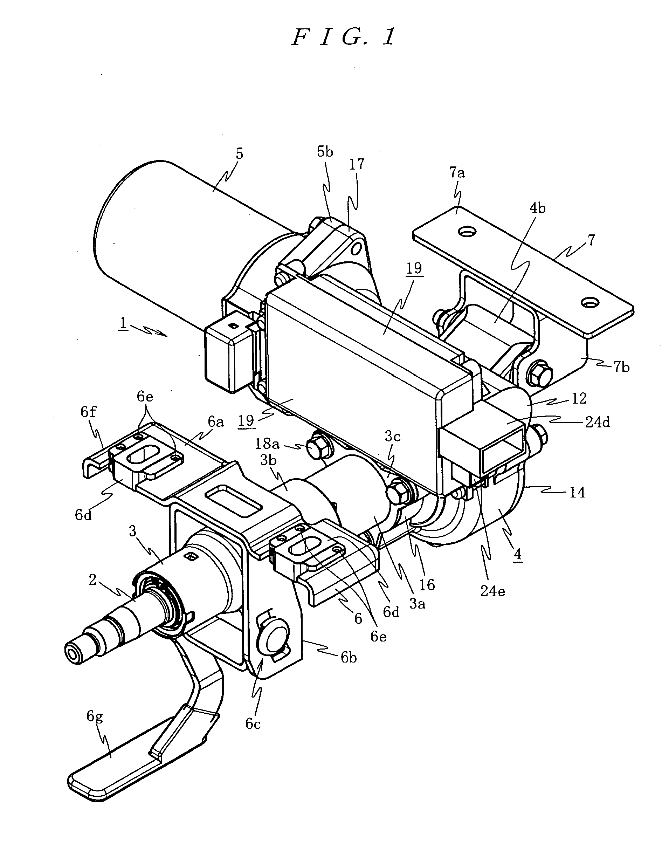

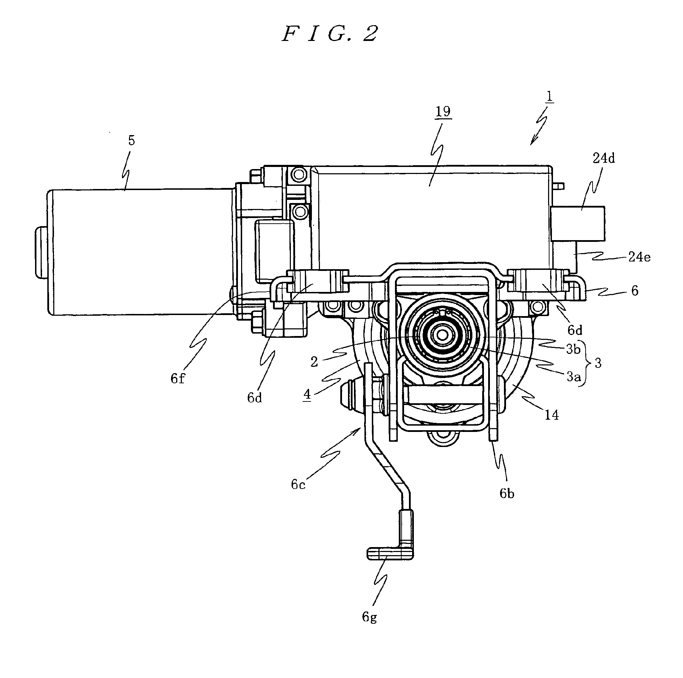

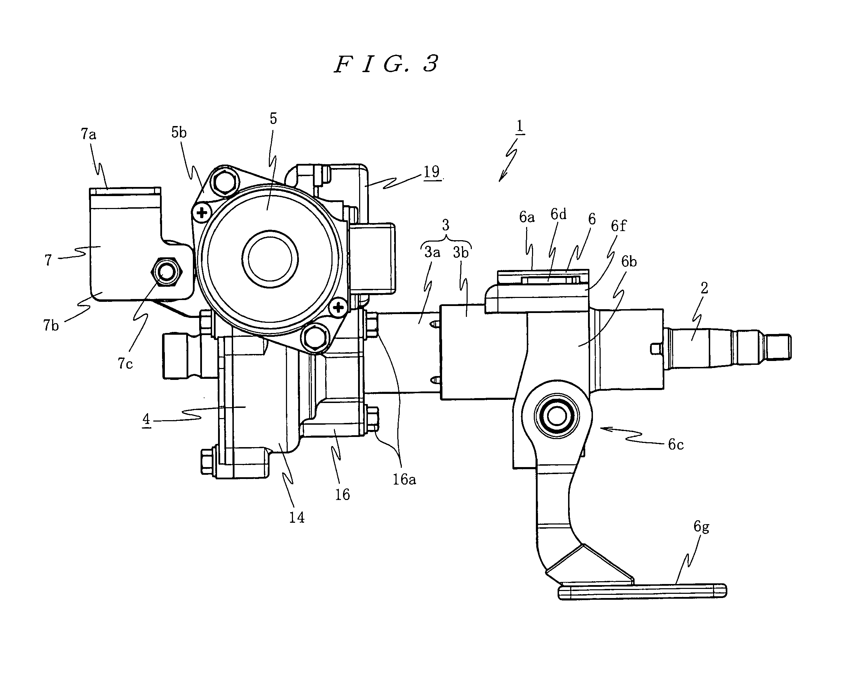

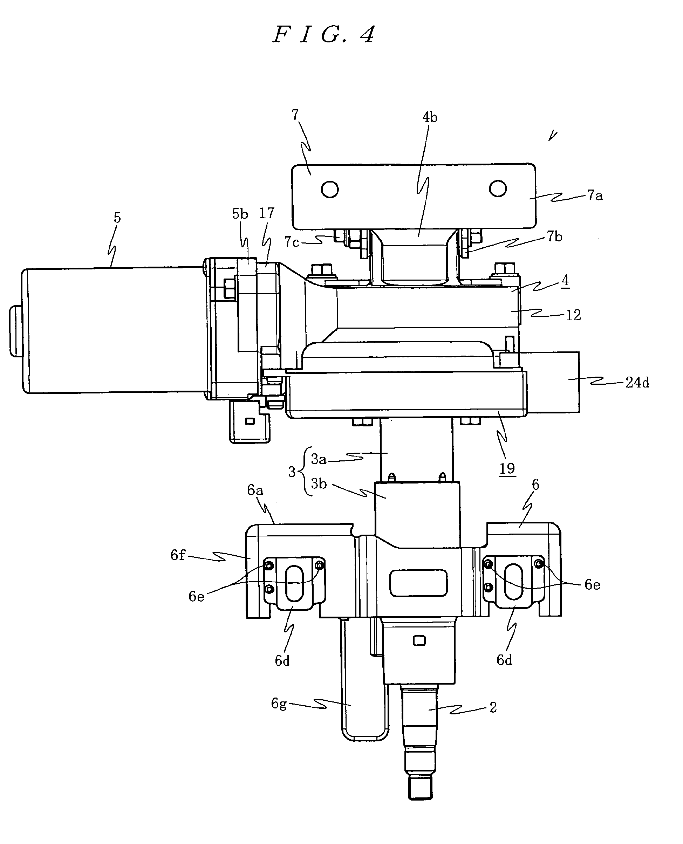

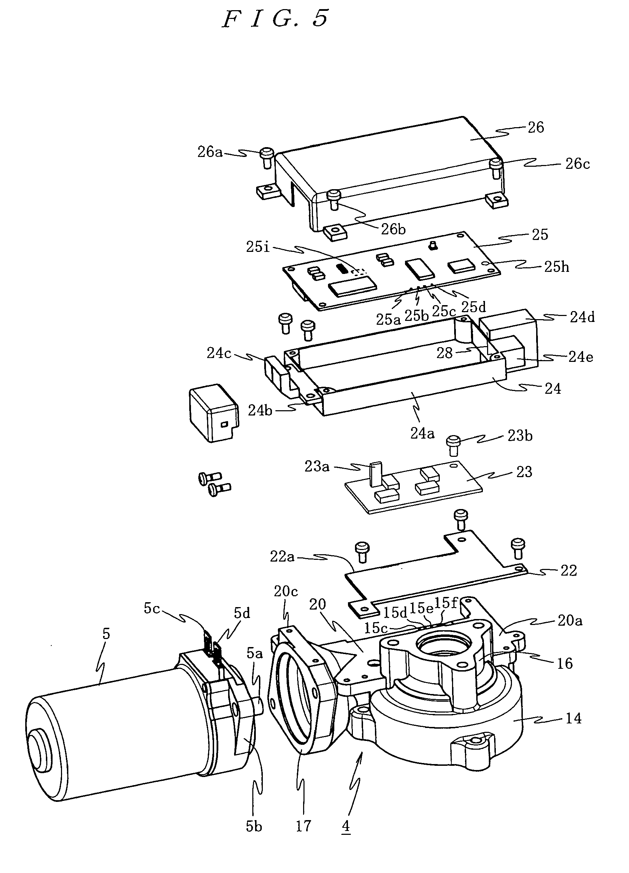

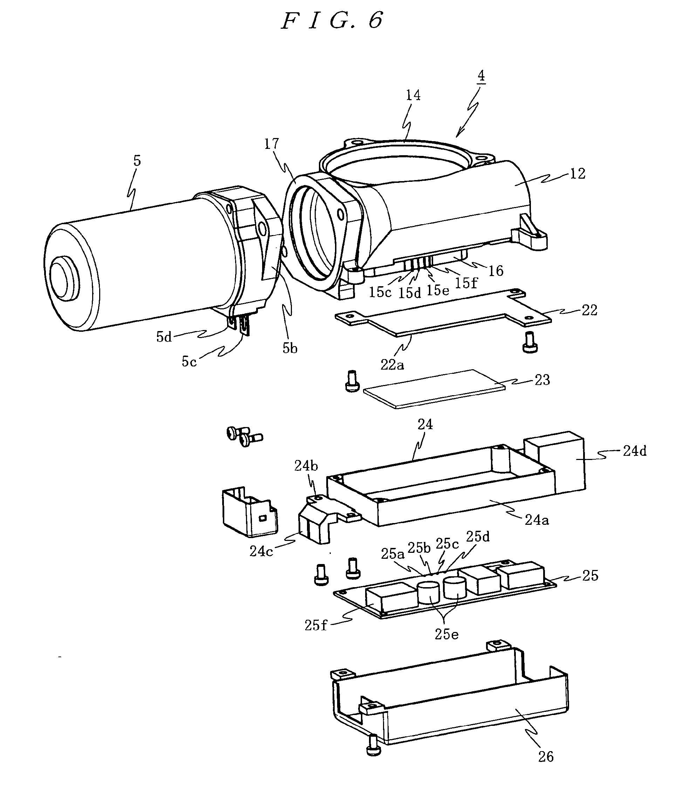

FIG. 1 is a perspective view showing an example of a case in which a first embodiment of the present invention is applied to a right-hand drive car. FIG. 2 is a front view, FIG. 3 is a left side view, FIG. 4 is a plan view, and FIGS. 5 and 6 are disassembled perspective views of a main part of the example.
In FIG. 1, reference numeral 1 denotes a column-type electric power steering apparatus. A reduction gear box 4 is coupled to a steering column 3 in which a steering shaft 2 coupled to a steering wheel (not shown) is inserted rotatably. In this reduction gear box 4, an electric motor 5 including a brush motor, an axial direction of which is extended in a direction orthogonal to an axial direction of the steering column 3, is disposed.

The steering column 3 has, in a coupling section with the reduction gear box 4, a double tube structure including an inner tube 3a and an outer tube 3b for absorbing impact energy at the time of collapse and securing a predetermined collapse stroke. The outer tube 3b of the steering column 3 and the reduction gear box 4 are attached to a vehicle body side by an upper attachment bracket 6 and a lower attachment bracket 7.
The lower attachment bracket 7 is formed by an attachment plate section 7a attached to a vehicle body side member (not shown) and a pair of supporting plate sections 7b that extend in parallel while keeping a predetermined space with respect to a lower surface of this attachment plate section 7a. A distal end of the supporting plate section 7b is pivotally coupled to, via a pivot 7c, a supporting section 4b integrally formed in a cover 4a disposed on a lower end side of the reduction gear box 4, i.e., a vehicle front side.

The upper attachment bracket 6 includes an attachment plate section 6a attached to the vehicle body side member (not shown), a square frame-shaped supporting section 6b formed integrally with this attachment plate section 6a, and a tilt mechanism 6c, which supports the outer tube 3b of the steering column 3, formed in this square frame-shaped supporting section 6b. The attachment plate section 6a includes a pair of left and right capsules 6d attached to the vehicle body side member (not shown) and a sliding plate section 6f fixed to these capsules 6d by a resin injection 6e. When a load for moving the steering column 3 to the vehicle front is applied thereto at the time of collision, the sliding plate section 6f slides to the vehicle front with respect to the capsule 6d, the resin injection 6e is sheared, and a load of the shearing acts as a collapse start load. It is possible to adjust a tilt position of the steering column 3 up and down around the pivot 7c of the lower attachment bracket 7 by releasing a supporting state by pivoting a tilt lever 6g of the tilt mechanism 6c.

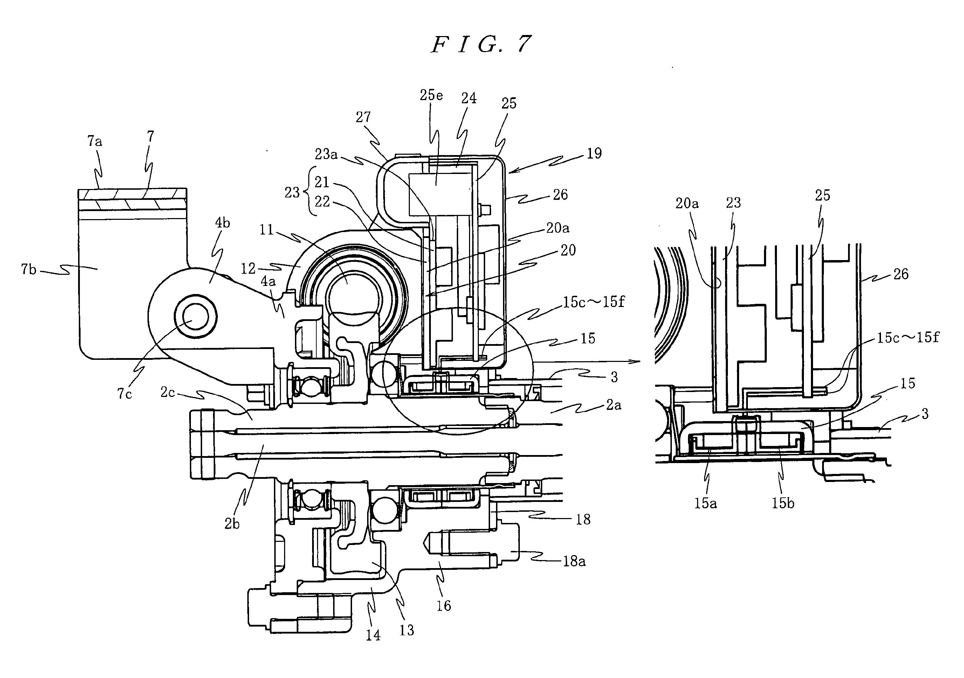

As shown in FIG. 7, the steering shaft 2 includes an input shaft 2a, an upper end of which is coupled to the steering wheel (not shown), and an output shaft 2c that is coupled to a lower end of this input shaft 2a via a torsion bar 2b and covers the torsion bar 2b.
Moreover, as shown in FIGS. 5 to 7, the reduction gear box 4 is formed by, for example, die-casting a material having high heat conductivity and electric conductivity, for example, any one of aluminum, an aluminum alloy, magnesium, and a magnesium alloy.

This reduction gear box 4 includes a worm housing unit 12 that houses a worm 11 coupled to the output shaft 5a of the electric motor 5, a worm-wheel housing unit 14 that is provided on a lower side of this worm housing unit 12, has a center axis orthogonal to a center axis of the worm housing unit 12, and houses a worm wheel 13 that meshes with the worm 11, a torque-sensor housing unit 16 that is integrally and coaxially coupled to a rear side of this worm-wheel housing unit 14 and houses a torque sensor 15, a motor mounting section 17 that is formed in an open end face of the worm housing unit 12 and to which the electric motor 5 is attached, a column attaching section 18 that is formed in an rear end face of the torque-sensor housing unit 16 and to which an attachment flange 2a formed at a front end of the steering column 3 is attached, and a control-unit mounting section 20 that is formed in a plane orthogonal to a center axis of the worm-wheel housing unit 14 and the torque-sensor housing unit 16 across a part of the worm housing unit 12 and the worm-wheel housing unit 14 and on which a control unit 19 is mounted. The reduction gear box 4 is fixed to the steering column 3 by a bolt 18a in a state in which the attachment flange 3c of the steering column 3 is brought into contact with the column attaching section 18.

As shown in FIG. 7, the torque sensor 15 is configured to magnetically detect a twist state between the input shaft 2a and the output shaft 2c of the steering shaft 2 and detect steering torque transmitted to the steering shaft with a pair of detection coils 15a and 15b. External connection terminals 15c, 15d, 15e, and 15f, which project to the outside in parallel to a direction orthogonal to a center axis of the steering column 3, are connected to starts and ends of winding of these pair of detection coils 15a and 15b, respectively. Projecting portions of these external connection terminals 15c to 15f are bent, in the center thereof, in parallel to the center axis of the steering column 3 and formed in an L shape.

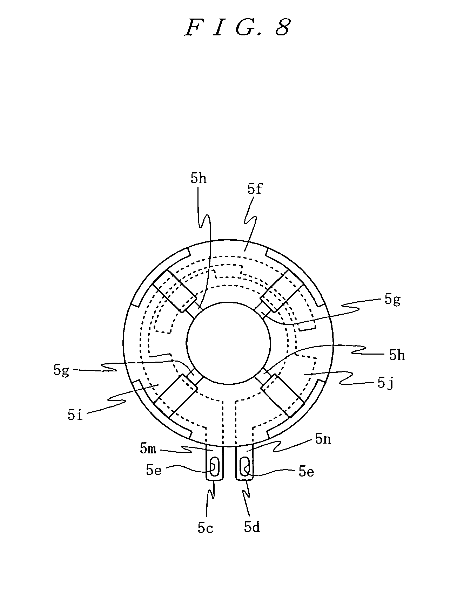

In the electric motor 5, in a position close to and opposed to the control unit 19 mounted on the control-unit mounting section 20 in a position closer to an attachment flange section 5b of the electric motor 5, bus bars 5c and 5d serving as connection terminals connected to a built-in brush are protrudingly formed toward the rear of the vehicle body perpendicular to an axis direction of the electric motor 5 and to be substantially parallel to the center axis of the steering column 3. Long holes 5e through which fixing screws are inserted are drilled at distal end portions of these bus bars 5c and 5d.
As shown in FIG. 8, the respective bus bars 5c and 5d are disposed to be insulated from each other in a brush supporting member 5f made of synthetic resin having an armature insertion hole in the center of a bottom portion thereof. The bus bars 5c and 5d include arcuate conductor sections 5i and 5j separately connected to two pairs of brushes 5g and 5h and terminal sections 5m and 5n that extend in parallel to the outside from one ends opposed to each other of these arcuate conductor sections 5i and 5j. The electric motor 5 is attached with the attachment flange section 5b thereof coupled to the motor mounting section 17 of the reduction gear box 4, the worm 11 coupled to the output shaft 5a thereof, and the bus bars 5c and 5d extended to the rear of the vehicle body.

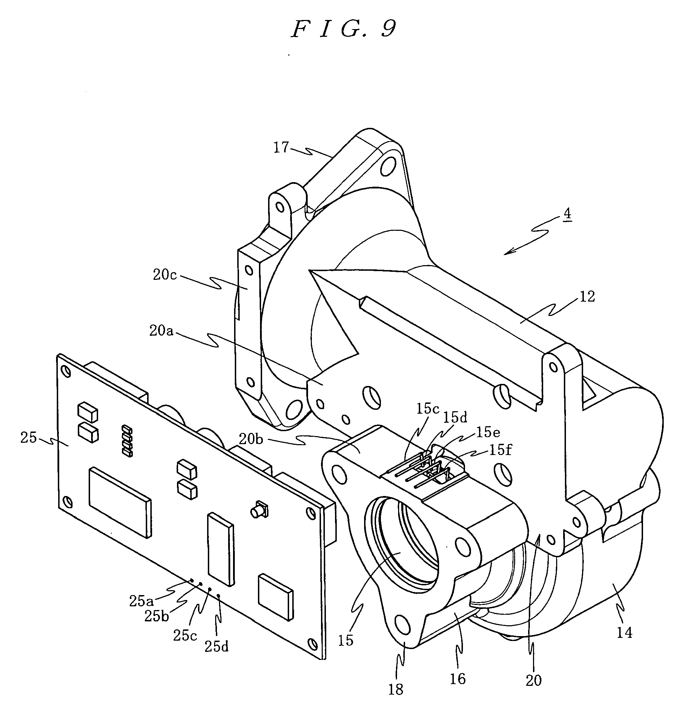

Moreover, as it is evident with reference to FIG. 9, in the control-unit mounting section 20 formed in the reduction gear box 4, a flat attaching surface 20a is formed by the worm housing unit 12 and an upper side of the worm-wheel housing unit 14 on a lower side of the worm housing unit 12. The control-unit mounting section 20 is formed in an L shape viewed from a left side surface by the flat attaching surface 20a and a flat surface 20b formed on an upper surface of the torque-sensor housing unit 16 and orthogonal to the flat attaching surface 20a. A narrow frame attaching surface 20c is also formed on a rear end surface of the motor mounting section 17 in parallel to the flat attaching surface 20a and in a position further on a rear side than the flat attaching surface 20a. The external connection terminals 15c to 15f of the torque sensor 15 are projected from the center in the left to right direction of the flat surface 20b in the torque-sensor housing unit 16.

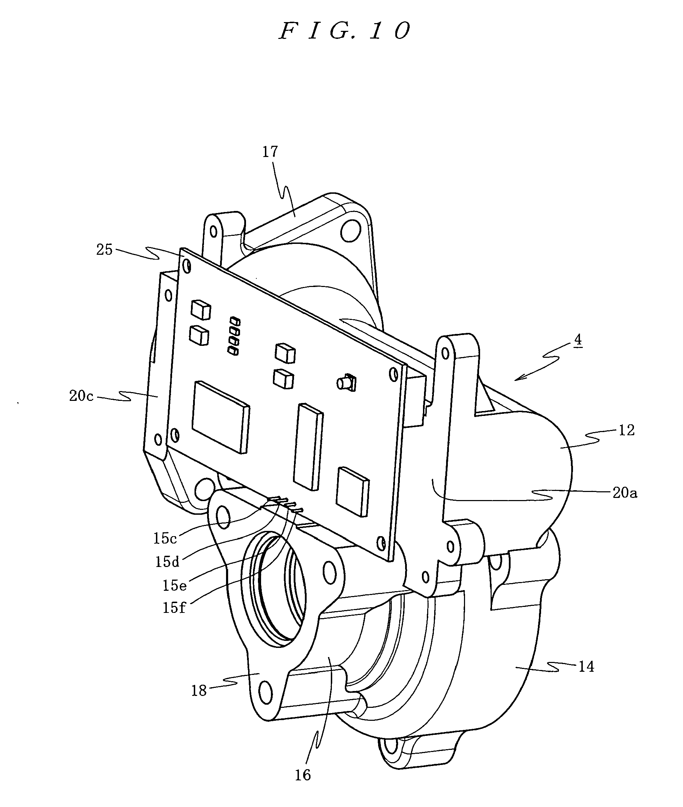

As shown in FIGS. 5, 6, and 10, the control unit 19 mounted on this control-unit mounting section 20 includes an aluminum plate 22 directly fixed to the flat surface 20, a power module board 23 fixed to this aluminum plate 22, a synthetic resin frame 24 as an insulated frame that surrounds the aluminum plate 22 and the power module board 23, a control board 25 attached to the front of this synthetic resin frame 24, and a conductive cover 26 that covers these members.

The aluminum plate 22 has a size fit in the synthetic resin frame 24 and is placed on and screwed to the flat surface 20 via heat radiation grease.
The power module board 23 is mounted with, on a surface thereof, an H bridge circuit including a power switching element such as a field effect transistor, which controls to drive the electric motor 5, and a power module such as a pulse width modulation circuit, which drives the power switching element of this H bridge circuit, and is closely attached and screwed to the aluminum plate 22 on a rear surface thereof.

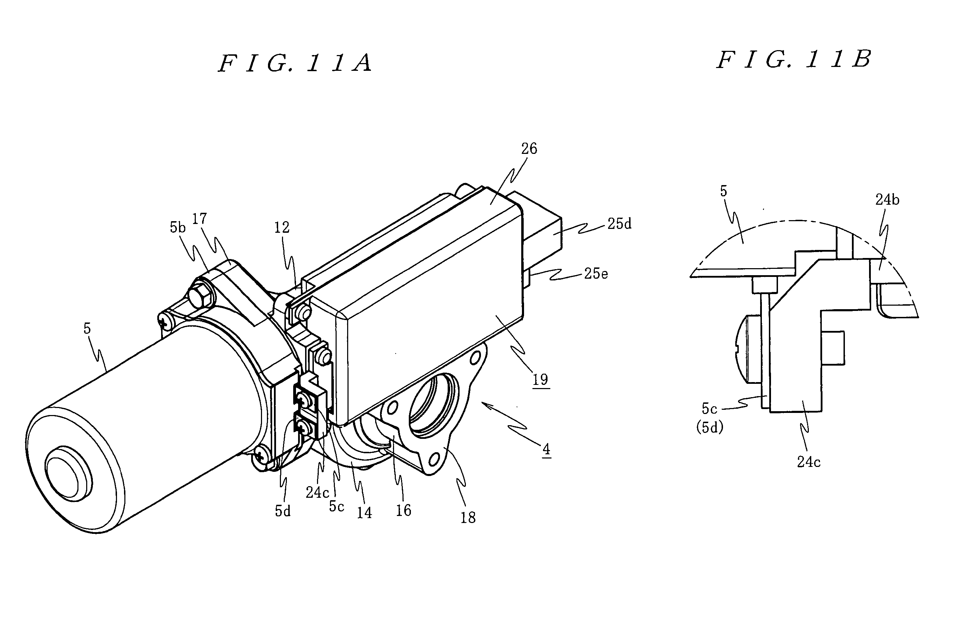

The synthetic resin frame 24 has integrally formed therein a frame main body 24a of a rectangular frame shape, an attachment plate section 24b that is protrudingly formed in a position opposed to the bus bars 5c and 5d of the electric motor 5 at a left end of this frame main body 24a and is fixed to the frame attaching surface 20c of the reduction gear box 4, a terminal block 24c that is projected in an L shape from this attachment plate section 24b and electrically connects the bus bars 5c and 5d of the electric motor 5 as shown in FIGS. 11A and 11B, a power supply connector 24e that is disposed in a center position at a right end of the frame main body 24a and connected to a battery 30 described later, and a signal connector 24f that performs exchange of data with control devices of respective units of the vehicle body and is connected to a network such as a CAN. In the respective power supply connector 24e and signal connector 24f, connection connector insertion openings are formed on right end sides such that external connection connectors connected to these connectors are inserted from a right side of the vehicle body.

In the control board 25, through holes 25a to 25d, through which the external connection terminals 15c to 15f of the torque sensor 15 attached to the front of the synthetic resin frame 24 are directly inserted, are drilled. The control board 25 is mounted with a micro control unit (MCU) that calculates a steering assisting current command value on the basis of a torque detection value from the torque sensor 15 and a vehicle speed detection value from a not-shown speed sensor and performs current feedback control on the basis of this steering assisting current command value and a detection value of a motor current outputted to the electric motor 5 to calculate a voltage command value to the pulse width modulation circuit of the power module board 23 to thereby control a steering assisting force generated by the electric motor 5 and peripheral devices of the MCU.

Specifically, as shown in FIGS. 5 and 6, in the control board 25, large components such as a capacitor 25e and a power relay 25f are arranged to be aligned in the left to right direction on an upper side on a front side opposed to the power module board 23. A micro control unit (MCU) 25g and peripheral devices of the MCU 25g are disposed on a lower side on a rear side thereof. As shown in FIG. 7, an arrangement position of the large components such as the capacitor 25e and the power relay 25f is a position where the large components such as the capacitor 25e and the power relay 25f are above an upper edge of the control-unit mounting section 20 formed in the reduction gear box 4 when the control board 25 is attached to the synthetic resin frame 24. Distal ends of these large components are set to be in a state in which the distal ends project to above the worm housing 12 through a cutout section 22a formed in an upper part of the aluminum plate 22. Projecting portions of these large components are covered with a partial cover 27. In this way, the large components such as the capacitor 25e and the power relay 25f are arranged above the control board 25 and to be projected to the side above the worm housing unit 12. Consequently, it is possible to effectively use a free space on an upper side of the worm housing unit 12 in the reduction gear box 4, reduce the thickness from the power module board 23 of the control unit 19 to a rear end face of the conductive cover 26, and reduce a size of the control unit 19.

The control unit 19 having the structure described above is assembled as described below. First, heat radiation grease is applied to a mounting position of the power module board 23 on the flat attaching surface 20a in the control-unit mounting section 20 of the reduction gear box 4 and, then, the power module board 23 is placed on the heat radiation grease and screwed to the flat attaching surface 20a. Subsequently, the synthetic resin frame 24 is placed on the flat attaching surface 20a and the frame attaching surface 20c to surround the power module board 23. The attachment plate section 24b of the synthetic resin frame 24 is screwed to the frame attaching surface 20c of the reduction gear box 4 in the same manner. After or before screwing the attachment plate section 24b, the control board 25 is screwed on a front side of the synthetic resin frame 24 after the external connection terminals 15c to 15f of the torque sensor 15 are inserted through the through holes 25a to 25d of the control board 25. Subsequently, the external connection terminals 15c to 15f and the through holes 25a to 25d are soldered and, then, finally, the conductive cover 26 is attached to the flat attaching surface 25a and the partial cover 27 is attached to the conductive cover 26 to cover the large components from the front surface side.

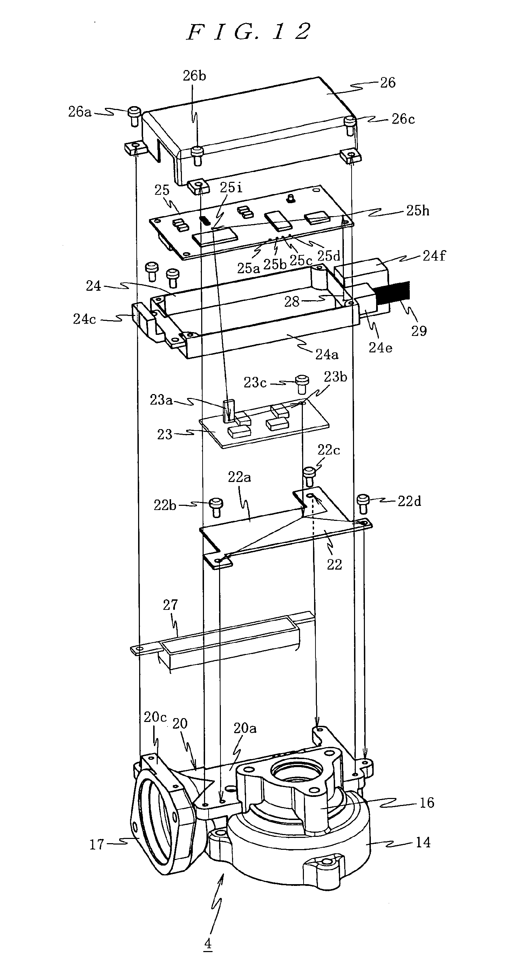

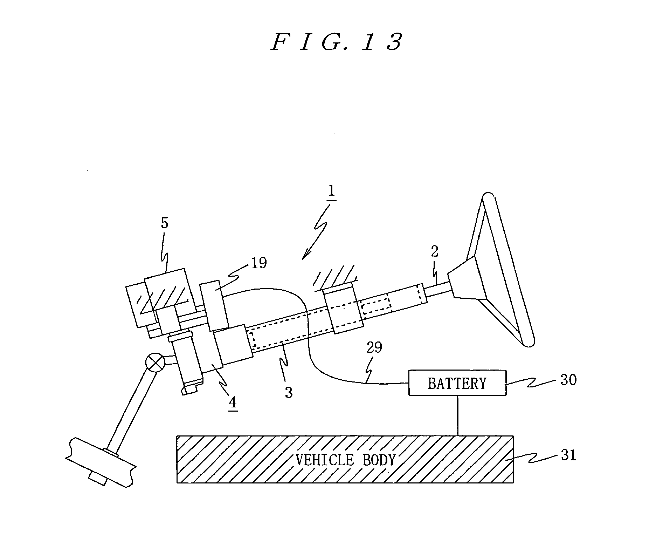

When the assembly of the control unit 19 is completed in this way, as shown in FIG. 12, an L-shaped ground pin 28 projected into the synthetic resin frame 24 from the power supply connector 24e and bent upward is inserted through a through hole 25h of the control board 25. This through hole 25h is connected to a contact point 25i via a ground line (not shown) formed on a rear surface side of the control board 25. A lead frame 23a formed on the surface of the power module board 23 is connected to this connection point. This lead frame 23a is connected to a screw insertion hole 23b via a ground line (not shown) formed on the surface of the power module board 23, connected from this screw insertion hole 23b to the aluminum plate 22 via a screw 23c, and connected from this aluminum plate 22 to the flat surface 20 of the reduction gear box 4 via respective screws 22b to 22d. Thereafter, the lead frame 23a is connected to the conductive cover 26 via screws 26a to 26c. In this way, the reduction gear box 4, the conductive cover 26, and the control unit 19 are connected to a ground pin 28 of the power supply connector 24e. As shown in FIG. 13, the power supply connector 24e is connected to the battery 30 serving as a power feeding unit via a battery ground harness 29 serving as a grounding line. A negative electrode side terminal of this battery 30 is grounded to a vehicle body side member 31.

Thereafter, the steering column 3, the steering shaft 2, the worm 11, and the worm wheel 13 are assembled and, finally, the electric motor 5 is assembled. As shown in FIGS. 11A and 11B, the bus bars 5c and 5d are screwed to the terminal block 24c of the control unit 19.
In this way, in a state in which the control unit 19 is mounted on the control-unit mounting section 20 of the reduction gear box 4, the thickness of the control unit 19 and a position of the flat attaching surface 20a of the control-unit mounting section 20 are set such that the control unit 19 is located further on the front side than a head of the bolt 18a for fixing the attachment flange 3c of the steering column 3 that serves as a stopper at the time of steering column contraction at the time of collapse in a rear end surface position of the cover 26 of the control unit 19 and a rearmost end position of the reduction gear box 4. The control unit 19 is mounted in a position where, at the time of collapse, which will be described later, the control unit 19 does not interfere with a moving member at the time of collapse.

Since it is unnecessary to provide a motor harness between the electric motor and the control unit, noise radiated from the motor harness is reduced and it is possible to reduce the influence on radio noise.
The power supply connector 24e and the signal connector 24f are disposed on a side of the control unit 19 opposite to the electric motor 5, i.e., on the right side of the vehicle. The electric motor 5, the control unit 19, the power supply connector 24e, and the signal connector 24f are linearly arranged. It is easy to connect the power supply connector 24e and the signal connector 24f to a battery side connector and a network side connector. Connections of the power supply connector 24d and the signal connector 24f to the connectors forming pairs with the connectors 24d and 24e, respectively, are each in a horizontal direction. It is possible to prevent penetration of drops of water and dust.

Next, operations in the first embodiment are explained.
First, to assemble an electric power steering apparatus 1, the torque sensor 15 is fixedly arranged in the torque-sensor housing unit 16 of the reduction gear box 4 such that the distal ends of the external connection terminals 15c to 15f thereof extend to the rear of the vehicle body along the outer peripheral portion of the steering column 3.
Subsequently, the control unit 19 is mounted on the control-unit mounting section 20 of the reduction gear box 4. In this mounting of the control unit 19, first, heat radiation grease is applied to the flat attaching surface 20a and, then, the aluminum plate 22 is placed on the heat radiation grease and screwed to the flat attaching surface 20a by screws 22a to 22c. The power module board 23 is screwed to this aluminum plate 22 by a screw 23a.

In this state, the synthetic resin frame 24 is placed on the flat attaching surface 20a to surround the power module board 23 and the attachment plate section 24b of the synthetic resin frame 24 is brought into contact with the frame attaching surface 20c of the reduction gear box 4 and screwed. Moreover, the external connection terminals 15c to 15f of the torque sensor 15 are inserted through the through holes 25a to 25d of the control board 25 on a front side of the synthetic resin frame 24, i.e., the vehicle rear side, the through holes 25a to 25d and the external connection terminals 15c to 15f of the torque sensor 15 are soldered and the through hole 25h and the ground pin 28 are soldered, and, then, the conductive cover 26 and the partial cover 27 are attached, whereby the control unit 19 is configured.

Subsequently, the steering shaft 2, the steering column 3, the worm 11, the worm wheel 13, and the like are mounted on the reduction gear box 4 and, finally, the electric motor 5 is attached to the motor mounting section 17 of the reduction gear box 4 and the bus bars 5c and 5d of the electric motor 5 are screwed to the terminal block 24c of the control unit 19. The battery ground harness 29, one end of which is separately connected to a positive electrode side terminal and a negative electrode side terminal of the battery 30, is connected to the power supply connector 24e.
Consequently, as described above, the first grounding path is formed in which the control board 25 is grounded via the ground pin 28 of the power supply connector 24e, the power module board 23 is grounded to the connection point 25i of this control board 25 via the lead frame 23a, the aluminum plate 22 is grounded to this power board plate 23 via the screw 23b, the reduction gear box 4 is grounded to this aluminum plate 22 via the screws 22a to 22c, and the conductive cover 26 and the partial cover 27 are grounded to the reduction gear box 4 via the screws 26a to 26c.

This first grounding path is formed simply by assembling the control unit 19 to the reduction gear box 4. Moreover, the battery ground harness 29, one end of which is connected to the battery 30, is connected to the power supply connector 24e, whereby the grounding path is grounded to the negative electrode side terminal of the battery 30.
The grounding path of the control unit 19, the reduction gear box 4, and the electric motor 5 can be formed by connecting the battery ground harness 29, which is connected to the battery 30, to the power supply connector 24e of the control unit 19 in this way. Unlike the example in the past described above, it is unnecessary to separately ground the reduction gear box 4 and the control unit 19 to the vehicle body side member. Therefore, it is possible to reduce the number of components and substantially improve assemblability.

Moreover, since the reduction gear box 4 is grounded, it is possible to improve electromagnetic compatibility (EMC) of the torque sensor 15 incorporated in the reduction gear box 4. Since the conductive cover 26 and the partial cover 27 of the control unit 19 are grounded, it is possible to surely prevent radio noise generated in the switching element such as the FET configuring the bridge circuit formed in the power module board 23 from being radiated to the outside and it is possible to surely prevent an electromagnetic wave from intruding into the control unit 19 from the outside, whereby it is possible to improve electromagnetic compatibility (EMC). Moreover, since the reduction gear box 4 and the control unit 19 are grounded to the battery 30 via the common battery ground harness 29, an earth potential difference does not occur between the reduction gear box 4 and the control unit 10. It is possible to surely control a fall in electromagnetic compatibility (EMC) and fluctuation in control accuracy caused by the earth potential difference.

By configuring the control unit 19 as described above, the bus bars 5c and 5d of the electric motor 5 can be electrically connected directly to the terminal block 24c of the control unit 19 without the intervention of a motor harness. The external connection terminals 15c to 15f of the torque sensor 15 and the through holes 25a to 25d of the control board 25 can be electrically connected directly without the intervention of a signal cable. Therefore, the electric connection length between the control unit 19 and the electric motor 5 and torque sensor 15 can be minimized and a wiring resistance can be minimized. It is possible to control a power loss and surely prevent electric noise from being mixed in the electric connection.

Moreover, the attachment plate section 24b is formed near the terminal block 24c connected to the bus bars 5c and 5d of the electric motor 5 formed in the synthetic resin frame 24 in the control unit 19. This attachment plate section 24b is fixed to the frame attaching surface 20c formed in the motor mounting section 17 of the reduction gear box 4. Therefore, the terminal block 24c can generate, with vibration of the vehicle, vibration different from that of the reduction gear box 4 to prevent stress concentration from occurring in the terminal block 24c and improve rigidity of the terminal block 24c.

The power module board 23 involving heat generation, which configures the control unit 19, is in contact with and connected to, via the aluminum plate 22, the flat attaching surface 20a in the control-unit mounting section 20 of the reduction gear box 4 formed of any one of aluminum, an aluminum alloy, magnesium, and a magnesium alloy. Therefore, it is possible to directly radiate the generated heat of the power module board 23 to the reduction gear box 4 serving as the heat mass with a large heat capacity via the aluminum plate 22 and the heat radiation grease and surely prevent the power module board 23 from coming into an overheated state. In this way, it is possible to further improve the effect of heat radiation to the reduction gear box 4 by applying the heat radiation grease between the aluminum plate 22 and the flat attaching surface 20a.

Moreover, the power module configured by the field effect transistor and the like involving heat generation is mounted on the power module board 23 and the control element such as the micro control unit 25g that rejects heat is mounted on the control board 25. Therefore, the generated heat of the power module board 23 is not directly transmitted to the control board 25. It is possible to surely prevent the generated heat of the power module board 23 from affecting the control board 25. Moreover, the heat generating members such as the capacitor 25e mounted on the control board 25 are arranged in the upper part. Therefore, it is possible to surely prevent the heat generated by the heat generating members from affecting the control elements disposed in the lower part and on the opposite side of the heat generating members.

Moreover, it is possible to reduce the length in the axial direction of the entire reduction gear box 4 and realize a reduction in size thereof by arranging the control unit 19 above the torque-sensor housing unit 16 of the reduction gear box 4.
The upper attachment bracket 6 and the lower attachment bracket 7 are attached to the vehicle body side member and, then, the connection connector of the network such as the CAN is attached to the signal connector 24f of the control unit 19 from the vehicle body right side, whereby the assembly of the electric power steering apparatus 1 is completed. In this way, the connection of the external connection connectors to the power supply connector 24e and the signal connector 24f can be performed from the vehicle body right side. Therefore, it is possible to easily perform connection of both the connectors. In this case, in the upper attachment bracket 6, as shown in FIG. 1, the sliding plate section 6f is fixed to the capsule 6d configuring the attachment plate section 6a by the resin injection 6e.

When this assembly of the electric power steering apparatus 1 is completed, it is possible to release a tilt lock state by pivoting the tilt lever 6g of the upper attachment bracket 6 and adjust a tilt position by pivoting the steering column 3 in this state around the pivot 7c of the lower attachment bracket 7.
When a not-shown ignition switch of the vehicle is turned on to supply electric power to the power module board 23 and the control board 25 from the battery 30, steering assistance control processing is executed by the micro control unit (MCU) and a steering assisting current command value is calculated on the basis of detection values of the torque sensor 15 and the not-shown speed sensor. Current feedback processing is executed on the basis of this steering assisting current command value and a motor current detected by a motor-current detecting unit to calculate a voltage command value. This voltage command value is supplied to a gate driving circuit of the power module board 23 to control the H bridge circuit, whereby a motor driving current flows to the electric motor 5 to drive the electric motor 5 to generate a necessary steering assisting force in a normal or reverse rotating direction.

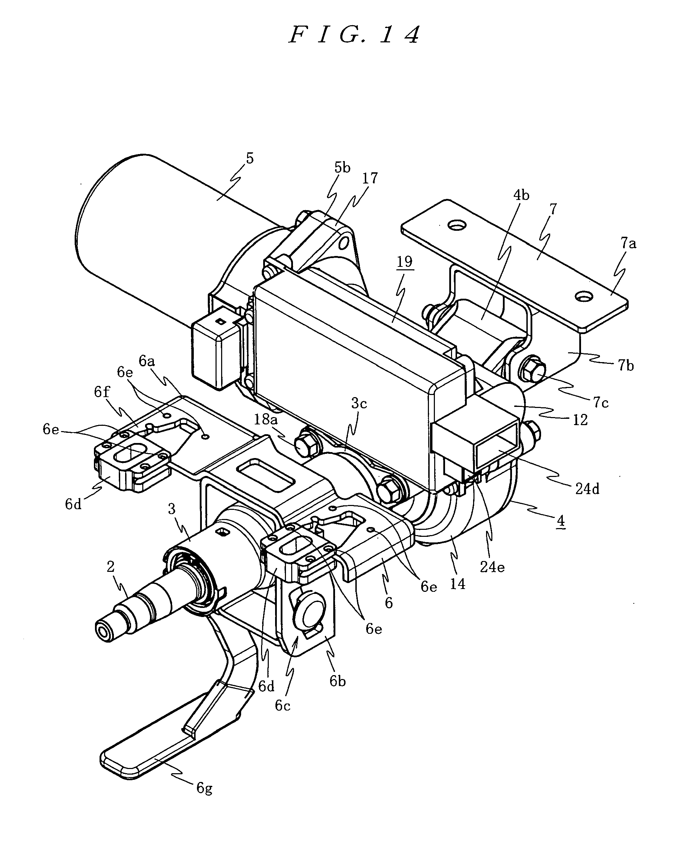

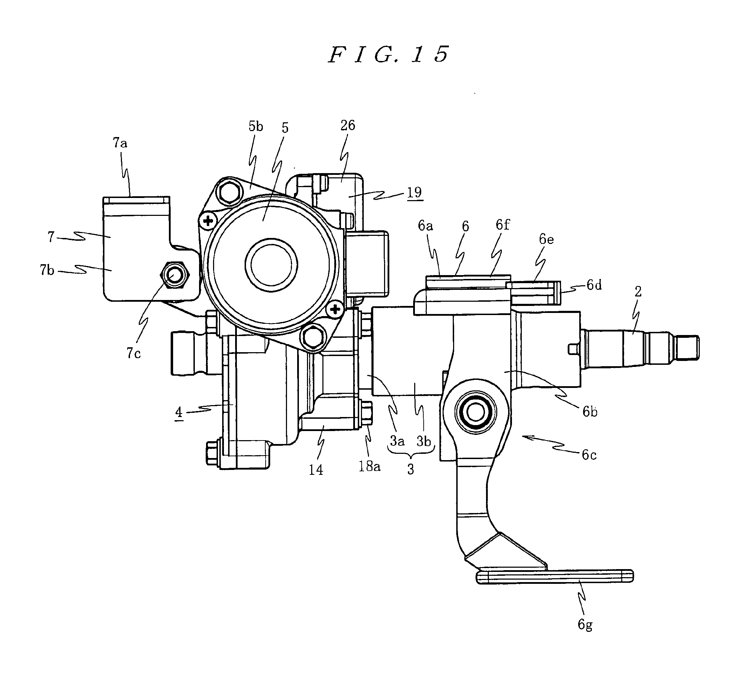

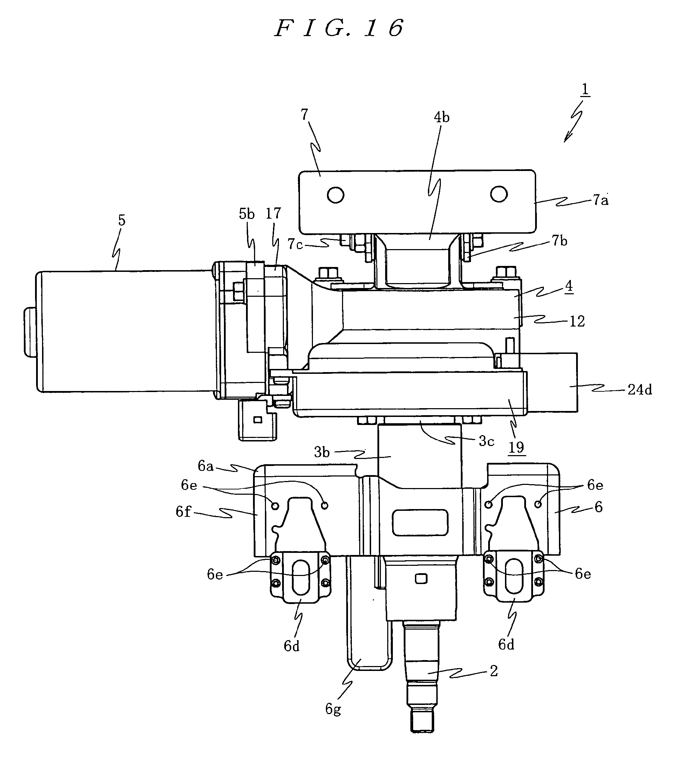

Therefore, a steering assisting force corresponding to steering torque of the steering wheel is generated from the electric motor 5 and this steering assisting force is transmitted to an output of the steering shaft via the worm 11 and the worm wheel 13. Consequently, it is possible to steer the steering wheel with a light steering force.
In this state, when a driver touches the not-shown steering wheel at the time of occurrence of collapse and a load that slides the steering column 3 forward acts on the steering column 3, as shown in FIGS. 14 to 16, the resin injection 6e between the capsule 6d and the sliding plate section 6f of the upper attachment bracket 6 is sheared. Consequently, the outer tube 3b slides with respect to the inner tube 3a on the attachment flange 3c side of the steering column 3 while absorbing the load and comes into contact with the head of the bolt 18a serving as the contraction stopper, whereby the steering column 3 contracts while securing a necessary collapse stroke.

When the steering column 3 contracts in this way, the members attached around the steering column 3 approach the control unit 19. However, this control unit 19 is arranged in a position where the control unit 19 does not interfere with moving components in a state in which a predetermined collapse stroke is secured. Therefore, the control unit 19 does not interfere with the moving components to prevent collapse. It is possible to secure the necessary collapse stroke.
Incidentally, although it is conceivable to crush the control unit 19 as well in order to secure a collapse stroke at the time of occurrence of collapse, as described above, this control unit 19 has a problem in that it is difficult to control the crush of the synthetic resin frame 24 and variation occurs in an energy absorption amount at the time of collapse. However, in this embodiment, since the crush of the control unit 19 is not taken into account to secure a collapse stroke, it is possible to secure a stable energy absorption amount as specified by a set value at the time of collapse.

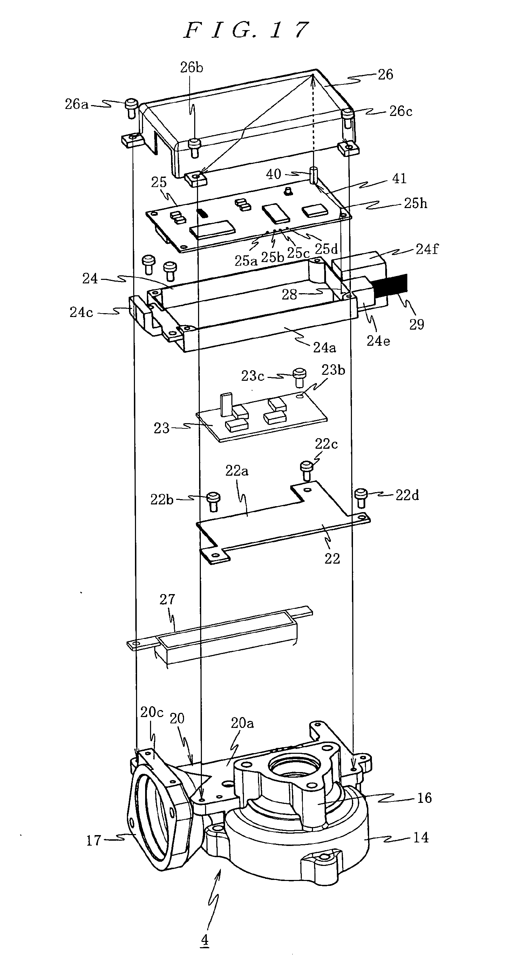

Next, a second embodiment of the present invention is explained with reference to FIG. 17.
In this second embodiment, the grounding path between the control unit 19 and the reduction gear box 4 is a grounding path different from that in the first embodiment.
In other words, in the second embodiment, as shown in FIG. 17, the grounding path in the control unit 19 is a second grounding path different from the first grounding path in the first embodiment.

In this second grounding path, as shown in FIG. 17, the ground pin 28 of the power supply connector 24e is inserted through the through hole 25h of the control board 25 to ground the control board 25. A ground line 41 is formed from this through hole 25h to a connection terminal 40 provided on the surface of the control board 25. This connection terminal 40 is set in contact with conductive cover 26 to ground the conductive cover 26. The conductive cover 26 is mounted on the flat attaching surface 20a of the reduction gear box 4 via the screws 26a to 26c, whereby the reduction gear box 4 is grounded. Moreover, the power module board 23 is grounded to the flat attaching surface 20a via the aluminum plate 22.

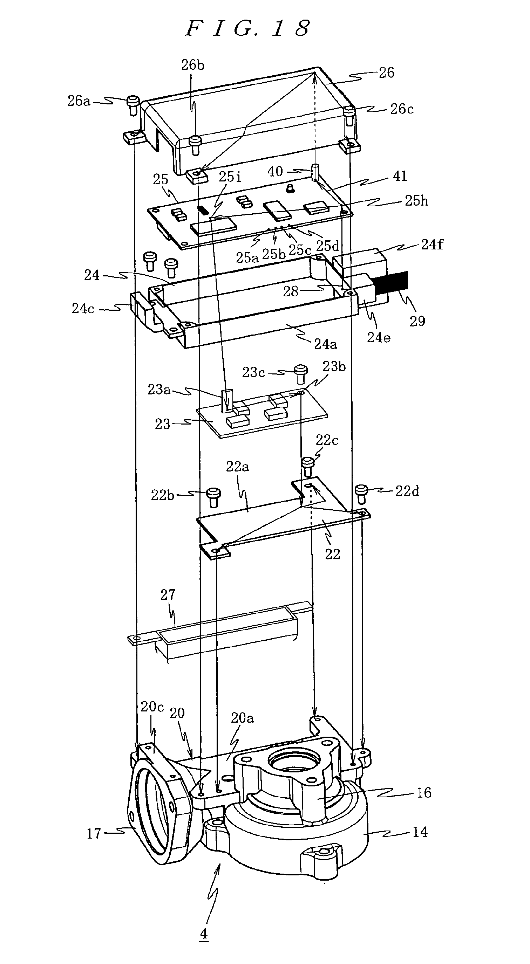

In this second embodiment, as in the first embodiment, the battery ground harness 29, one end of which is connected to the battery 30, is connected to the power supply connector 24e of the control unit 19. Consequently, it is possible to ground the reduction gear box 4, the electric motor 5, and the control unit 19 to the negative electrode side terminal of the battery 30. It is possible to easily form this second grounding path by assembling the control unit 19 to the reduction gear box 4.
In the first embodiment and the second embodiment, the case in which the first grounding path and the second grounding path are separately provided. However, the present invention is not limited to this. The first grounding path in the first embodiment in which the control board 25, the power module board 23, the aluminum plate 22, the reduction gear box 4, the conductive cover 26, and the partial cover 27 are connected in this order and the second grounding path in the second embodiment in which the control board 25, the conductive cover 26, the reduction gear box, the aluminum plate 22, and the power module board 23 are connected in this order may be formed in parallel, as shown in FIG. 18. In this case, since the double grounding paths are formed, even if disconnection or a connection failure occurs in one of the grounding path, it is possible to surely hold the grounding in the other grounding path.

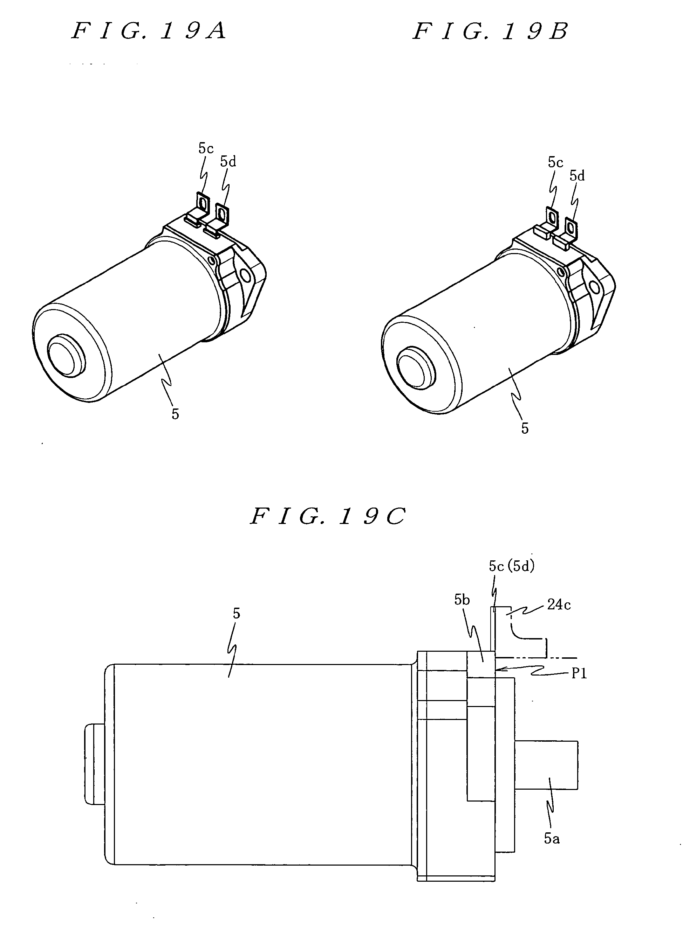

In the respective embodiments, the case in which the power module board 23 is attached to the flat attaching surface 20a of the reduction gear box 4 via the aluminum plate 22 is explained. However, the present invention is not limited to this. The power module board 23 itself may be made of an aluminum board to omit the aluminum plate 22.
In the respective embodiments, the case in which the bus bars 5c and 5d of the electric motor 5 linearly extend is explained. However, the present invention is not limited to this. As shown in FIG. 19A, the bus bars 5c and 5d may be once bent in an axial direction of the electric motor 5 and, then, extended outward in a direction orthogonal to the axial direction. In this case, since elasticity can be secured in bent portions of the bus bars 5c and 5d, it is possible to reduce residual stress generated at the time of connection of a terminal and a terminal block and extend durable life of the bus bars 5c and 5d. Similarly, as shown in FIG. 19B, the bus bars 5c and 5d may be projected in the axial direction of the electric motor 5 first and, then, extended outward in the direction orthogonal to the axial direction. Moreover, as shown in FIG. 19C, a contact surface between the bus bars 5c and 5d and the terminal block 24c of the control unit 19 is set to be within a plane including an attaching surface P1 of the attachment flange section 5b of the electric motor 5 in contact with the motor attaching surface 17 of the reduction gear box 4. Consequently, in serration-coupling or spline-coupling the output shaft 5a of the electric motor 5 to the worm 11 of the reduction gear box 4, when the electric motor 5 is mounted while being pivoted in a circumferential direction, the electric motor 5 can be pivoted without the bus bars 5c and 5d and the attachment flange section 5b interfering with the terminal block 24c of the control unit 19. Therefore, it is possible to easily perform work for assembling the electric motor 5 to the reduction gear box 4.

Moreover, in the respective embodiments, the case in which the bus bars 5c and 5d are provided in the electric motor 5 and the terminal block 24c is provided in the control unit 19 is explained. However, the present invention is not limited to this. A terminal block may be provided in the electric motor 5 and bus bars may be provided in the control unit 19. The external connection terminals are not limited to bus bars. Arbitrary electric connection terminals can be applied.
Furthermore, in the respective embodiments, the case in which the external connection terminals 15c to 15f of the torque sensor 15 are bent in an L shape and inserted through the through holes 25a to 25d of the control board 25 is explained. However, the present invention is not limited to this. In order to facilitate the insertion of the external connection terminals 15c to 15f through the through holes 25a to 25d, a guide member having a funnel-like guide surface may be provided on a side for inserting the external connection terminals 15c to 15f of the through holes 25a to 25d.

Moreover, in the respective embodiments, the case in which the external connection terminals 15c to 15f of the torque sensor 15 are formed in an L shape is explained. However, the present invention is not limited to this. The external connection terminals 15c to 15f may be formed in a linear shape and electrically connected by soldering, fusing, or the like along a connection land formed on the control board 25. The external connection terminals may be formed as clip terminals and clip the control board 25.
In the respective embodiments, the case in which the flat attaching surface 20a of the control-unit mounting section 20 of the reduction gear box 4 is the plane orthogonal to the center axis of the steering column 3 is explained. However, the present invention is not limited to this. The flat attaching surface 20a may be a surface inclined with respect to a surface orthogonal to the center axis of the steering column 3.

Moreover, in respective the embodiments, the case in which the electric motor 5, the control unit 19, and the connectors 24e and 24f are linearly arranged along the line orthogonal to the center axis of the steering column 3 is explained. However, the present invention is not limited to this. The electric motor 5, the control unit 19, and the connectors 24e and 24f may be linearly arranged along a line crossing the center axis of the steering column 3.
Furthermore, in the respective embodiments, the case in which the power supply connector 24e and the signal connector 24f of the control unit 19 have the connection openings thereof on the right end side is explained. However, the present invention is not limited to this. With the connection openings set in a direction along the axial direction of the steering column 3, the external connectors may be attached from the axial direction of the steering column 3.

Moreover, in the respective embodiments, the case in which, when the control unit 19 is assembled, first, the power module board 23 is screwed to the flat attaching surface 20a and, then, the synthetic resin frame 24 is fixed, and the control board 25 is screwed to this synthetic resin frame 24 is explained. However, the present invention is not limited to this. The synthetic resin frame 24 may be fixed to the flat attaching surface 20a after the power module board 23 and the control board 25 are attached to the synthetic resin frame 24. Moreover, a part of the synthetic resin frame 24 and the power module board 23 may be fastened together.

In the respective embodiments, the case in which, when the control unit 19 is assembled, first, the power module board 23 is screwed to the flat attaching surface 20a and, then, the synthetic resin frame 24 is fixed, and the control board 25 is screwed to this synthetic resin frame 24 is explained. However, the present invention is not limited to this. The synthetic resin frame 24 may be fixed to the flat attaching surface 20a after the power module board 23 and the control board 25 are attached to the synthetic resin frame 24. Moreover, a part of the synthetic resin frame 24 and the power module board 23 may be fastened together.

Moreover, in the respective embodiments, the case in which the brush motor is applied as the electric motor 5 is explained. However, the present invention is not limited to this. A brushless motor may be applied. In this case, it is sufficient to connect the bus bars 5c and 5d to power supply side of energization coils of respective phases and mount, on the power module board 23, an inverter circuit having, for example, a field effect transistor (FET) for driving the brushless motor and a gate driving circuit that drives a gate of the field effect transistor of the inverter circuit with a pulse width modulation signal.

Furthermore, in the respective embodiments, the case in which the present invention is applied to the right-hand drive car is explained. However, the present invention is not limited to this. When the present invention is applied to a left-hand drive car, as the arrangement of the reduction gear box 4, the electric motor 5, and the control unit 19, it is sufficient to arrange the electric motor 4 surface-symmetrically to the control unit 19 across a vertical surface passing the center axis of the steering column 3, i.e., on the right side of the control unit 19 and arrange the power supply connector 24e and the signal connector 24f of the control unit 19 on the left side. Moreover, the electric motor 4 may be arranged on the vehicle outer side and the power supply connector 24e and the signal connector 24f may be arranged on the vehicle inner side.

### Industrial Applicability

A control unit including a board mounted with a control circuit that controls to drive an electric motor is mounted on a reduction gear box, a connecting section of the electric motor is electrically connected to the control unit directly, and connection of the reduction gear box and the control unit to the ground is performed via a grounding line disposed between the control unit and a power feeding unit. Therefore, it is possible to obtain an electric power steering apparatus in which the reduction gear box and the control unit can be grounded to the power feeding unit via a common ground line, electromagnetic compatibility (EMC) of the reduction gear box can be improved, and the number of components and man-hour can be reduced to improve assemblability.

## Claims

1. An electric power steering apparatus comprising: a steering column having inserted therein a steering shaft to which steering torque is transmitted; and an electric motor that transmits a steering assisting force to the steering shaft via a reduction mechanism in a conductive reduction gear box, **characterized in that,**
a control unit including a board mounted with a control circuit that controls to drive the electric motor is mounted on the reduction gear box, a connecting section of the electric motor is electrically connected to the control unit directly, and connection of the reduction gear box and the control unit to a ground is performed via a grounding line disposed between the control unit and a power feeding unit.

2. The electric power steering apparatus according to claim 1, **characterized in that** the control unit includes at least a power module board mounted with a power module involving heat generation that controls to drive the electric motor and an insulated frame that surrounds the power module board and includes a unit side connecting section that connects the connecting section of the electric motor and a power supply connector to which the grounding line is connected, the power module board is mounted on a control-unit mounting surface of the reduction gear box, and the grounding line is connected to the reduction gear box via the power module board.

3. The electric power steering apparatus according to claim 1, **characterized in that** the control unit includes at least a board mounted with the control circuit, an insulated frame that surrounds the board and includes a unit side connecting section that connects the connecting section of the electric motor and a power supply connector to which the grounding line is connected, and a conductive cover that covers the control board, the power module board, and the insulated frame, and the grounding line is connected to the reduction gear box via the conductive cover.

4. The electric power steering apparatus according to claim 3, **characterized in that** the board includes a control board mounted with a command-value calculating unit that calculates a driving command value for the electric motor and a power module board mounted with a power module involving heat generation that controls to drive the electric motor on the basis of the driving command value from the command-value calculating unit.

5. The electric power steering apparatus according to claim 1, **characterized in that** the control unit includes at least a control board mounted with a command-value calculating unit that calculates a driving command value for the electric motor, a power module board mounted with a power module involving heat generation that controls to drive the electric motor, and an insulated frame that surrounds the control board and the power module board and includes a unit side connecting section that connects the connecting section of the electric motor and a power supply connector to which the grounding line is connected, the power module board is mounted on a control-unit mounting surface of the reduction gear box, and a first grounding path connected to the reduction gear box via the power module board and a second grounding path connected to the reduction gear box via the conductive cover are formed in parallel between the grounding line and the reduction gear box.

6. The electric power steering apparatus according to any one of claims 1 to 5, **characterized in that** the reduction gear box is made of a highly thermally conductive material.

7. The electric power steering apparatus according to claim 6, **characterized in that** the reduction gear box is formed by die-casting any one of aluminum, an aluminum alloy, magnesium, and a magnesium alloy.

8. The electric power steering apparatus according to any one of claims 1 to 7, **characterized in that** the reduction gear box includes at least a worm housing unit that houses a worm coupled to an output shaft of the electric motor, a worm-wheel housing unit that houses a worm wheel coupled to the steering shaft, and a torque-sensor housing unit that is continuously connected to the worm-wheel housing unit, houses the torque sensor, and is coupled to a steering column, and a control-unit mounting section on which the control unit is mounted is formed in an outer periphery of the worm housing unit, the worm-wheel housing unit, and the torque-sensor housing unit.

9. The electric power steering apparatus according to claim 8, **characterized in that** a distal end of the torque-sensor housing unit is formed as a contraction stopper for the steering column at the time of collapse, and a contraction stopper side end surface position of the control unit mounted on the control-unit mounting section is set further on a worm-wheel housing unit side than the contraction stopper.
